# EUROPÄISCHE PATENTSCHRIFT

(11) **EP 3 853 686 B1**
(45) Veröffentlichungstag und Bekanntmachung des Hinweises auf die Patenterteilung: **07.01.2026**
(21) Anmeldenummer: 19758649.8
(22) Anmeldetag: 15.08.2019
(51) Int. Cl.: G05G 5/03, G05G 1/30, B60K 26/02, B60T 7/02, F02D 41/24, F02D 11/10

(54) **VERFAHREN ZUM ERMITTELN VON SPRÜNGEN UND/ODER KNICKPUNKTEN IN EINER BETÄTIGUNGSCHARAKTERISTIK EINER BETÄTIGUNGSEINHEIT, AUSWERTEMODUL UND FAHRZEUG**
METHOD FOR DETERMINING JUMPS AND/OR BREAK POINTS IN AN ACTUATION CHARACTERISTIC OF AN ACTUATION UNIT, EVALUATION MODULE AND VEHICLE
PROCÉDÉ POUR LA DÉTERMINATION DE SAUTS ET/OU DE POINTS D'INFLEXION DANS UNE CARACTÉRISTIQUE D'ACTIONNEMENT D'UNE UNITÉ D'ACTIONNEMENT, MODULE D'ÉVALUATION ET VÉHICULE

(30) Priorität: 17.09.2018 DE 102018122664
(43) Veröffentlichungstag der Anmeldung: 28.07.2021
(73) Patentinhaber: ZF CV Systems Europe BV, 1170 Brussels (BE)
(72) Erfinder: MICHAELSEN, Arne, 30926 Seelze (DE)
(74) Vertreter: Rabe, Dirk-Heinrich
(86) Internationale Anmeldenummer: PCT/EP2019/071947
(87) Internationale Veröffentlichungsnummer: WO 2020/057874

(56) Entgegenhaltungen:
- DE-A1- 102010 063 075
- DE-A1- 102015 219 303
- DE-A1- 102016 219 622
- DE-B3- 102014 224 234
- DE-B3- 102016 203 176

## Beschreibung

Die Erfindung betrifft ein Verfahren zum Ermitteln von Sprüngen und/Knickpunkten in einer Betätigungscharakteristik einer Betätigungseinheit, sowie ein Auswertemodul zur Durchführung des Verfahrens und ein Fahrzeug.

Zum Beeinflussen der Fahrdynamik von Fahrzeugen sind fußbetätigte oder handbetätigte Betätigungseinheiten vorgesehen, die mechanisch über ein Betätigungsmittel, z.B. ein fußbetätigtes Pedal oder einen handbetätigten Hebel, von einem Fahrer oder automatisiert betätigt werden können. So kann der Fahrer beispielsweise ein Bremspedal oder ein Gaspedal oder ein Parkbremshebel oder ein Streckbremshebel um einen bestimmten Betätigungsweg auslenken, woraufhin das Fahrzeug in entsprechender Weise abgebremst bzw. beschleunigt wird. Dazu können von der jeweiligen Betätigungseinheit elektrisch Betätigungssignale ausgegeben werden, die die jeweilige Betätigung charakterisieren und die anschließend von einer Steuereinrichtung (ECU) weiterverarbeitet werden können. Die Steuereinrichtung kann als Teil eines elektrisch gesteuerten Bremssystems beispielsweise über Brems-Anforderungssignale Steuerventile oder Einlass-Auslassventil-Kombinationen bzw. elektrische Druckmodulatoren an den jeweiligen Fahrzeugachsen ansteuern, um eine der Bremspedal-Betätigung bzw. der Parkbremshebel- oder Streckbremshebel-Betätigung entsprechende elektrisch gesteuerte Bremsung zu bewirken. Entsprechend kann die Steuereinrichtung als Teil eines elektrisch gesteuerten Antriebssystems über Antriebs-Anforderungssignale einen Motor ansteuern, um eine der Gaspedal-Betätigung entsprechende Beschleunigung des Fahrzeuges zu bewirken.

Zur Erzeugung des Betätigungssignals sind in der jeweiligen Betätigungseinheit herkömmlicherweise Wegsensoren angeordnet, die den vom Fahrer oder automatisiert initiierten Betätigungsweg messen. Der gemessene Betätigungsweg wird anschließend unter Berücksichtigung einer Betätigungscharakteristik angepasst bzw. kalibriert und in Abhängigkeit davon ein kalibriertes Betätigungssignal an die Steuereinrichtung zur Umsetzung ausgegeben, wobei die Steuereinheit dazu aus den kalibrierten Betätigungssignalen die Anforderungssignale erzeugt. Die Betätigungscharakteristik wird dabei durch eine hinterlegte Betätigungskennlinie beschrieben, wobei die Betätigungskennlinie beispielsweise aus einer Federkennlinie folgt, die durch eine oder mehrere Federn festgelegt wird, die der Betätigung des jeweiligen Betätigungsmittels unterschiedlich stark entgegenwirken. Somit gibt die Betätigungskennlinie an, welche Betätigungskraft der Fahrer bei einem bestimmten Betätigungsweg aufwenden muss.

Herkömmlicherweise werden dabei mehrere Federn miteinander kombiniert, um eine kombinierte Federkennlinie zu erhalten, so dass über mehrere unterschiedliche Betätigungsbereiche ein bestimmtes Pedalfeeling bzw. Betätigungsfeeling erreicht werden kann. Daraus resultieren unterschiedliche Betätigungskräfte in den jeweiligen Betätigungsbereichen bzw. bei unterschiedlichen Betätigungswegen, die der Fahrer auch spürt. Für die einzelnen Betätigungsbereiche können unterschiedliche Fahrzeugreaktionen bzw. Änderungen in der Fahrdynamik festgelegt werden, was in dem kalibrierten Betätigungssignal über die hinterlegte Betätigungskennlinie bereits berücksichtigt wird. Um dies zu ermöglichen, müssen Sprünge und/oder Knickpunkte bzw. die Übergangsbereiche in der Federkennlinie zwischen den einzelnen Betätigungsbereichen bekannt sein und in den Verlauf der Betätigungskennlinie mit einfließen. Dazu wird die Betätigungskennlinie herkömmlicherweise vorab am Bandende für jede Betätigungseinheit einzeln ermittelt und in der jeweiligen Betätigungseinheit gespeichert, so dass diese ein entsprechend kalibriertes Betätigungssignal zur Umsetzung ausgeben kann, in dem die Sprünge bzw. Knickpunkte bereits berücksichtigt sind.

Dies hat den Nachteil, dass für jede Betätigungseinheit ein zeitaufwändiger Kalibriervorgang am Bandende nötig ist, um die Betätigungskennlinie zu erstellen, und in jeder Betätigungseinheit eine Auswerteeinheit mit einer Speichereinheit anzuordnen ist, um die Betätigungskennlinie zu speichern und zusammen mit den sensierten Betätigungswegen zu verarbeiten. Nur so kann der zuverlässige Betrieb bei einem Austausch der Betätigungseinheit oder der Steuereinrichtung, die die kalibrierten Betätigungssignale verarbeitet, sichergestellt werden, da eine Nachkalibrierung im Fahrzeug bisher nicht sicher möglich ist. Nachteilig ist weiterhin, dass auf eine Änderung der Betätigungskennlinie während des Betriebes, z.B. aufgrund von Abnutzungserscheinungen, nicht zuverlässig reagiert werden kann, da diese Änderungen nicht erfasst werden können.

Die DE102014224234B3 offenbart ein Verfahren zum Kalibrieren einer Signalgebervorrichtung eines haptischen Fahrpedalmoduls für ein Kraftfahrzeug sowie eine Vorrichtung zum Durchführen des Verfahrens vorgeschlagen. Die Signalgebervorrichtung weist ein mit einer Welle eines Aktuators gekoppeltes Federelement und ein Anschlagelement auf, welches dazu ausgeführt ist, an einer Pedalnase eines Pedalhebels des Fahrpedalmoduls anzuliegen und eine entgegen einer Betätigungsrichtung des Pedalhebels wirkende Kraft als haptisches Signal zu erzeugen. Das Verfahren weist die folgende Schritte auf: Verlagern des Anschlagelements entlang eines Verfahrwegs zwischen einer ersten Position und einer zweiten Position; Ermitteln, entlang des Verfahrwegs, einer Aktuatorsensorspannung sowie einer zum Verlagern des Anschlagelements dem Aktuator zugeführten Aktuatorspannung und/oder eines zum Verlagern des Anschlagelements dem Aktuator zugeführten Aktuatorstromes; Approximieren eines ersten Bereichs des Aktuatorstromes und/oder der Aktuatorspannung mit einem ersten Polynom; Approximieren eines zweiten Bereichs des Aktuatorstromes und/oder der Aktuatorspannung mit einem zweiten Polynom; und Ermitteln eines Schnittpunktes des ersten Polynoms und des zweiten Polynoms zum Bestimmen eines Berührpunktes zwischen dem Anschlagelement und der Pedalnase.

Aufgabe der Erfindung ist daher, ein Verfahren anzugeben, mit dem Sprünge und/oder Knickpunkte in einer Betätigungscharakteristik einer Betätigungseinheit in einfacher und zuverlässiger Weise ermittelt werden können. Aufgabe der Erfindung ist weiterhin, ein Auswertemodul und ein Fahrzeug bereitzustellen.

Diese Aufgabe wird durch ein Verfahren nach Anspruch 1 sowie ein Auswertemodul und ein Fahrzeug nach den weiteren unabhängigen Ansprüchen gelöst. Die Unteransprüche geben bevorzugte Weiterbildungen an.

Erfindungsgemäß ist demnach vorgesehen, dass Sprünge und/oder Knickpunkte in einer Betätigungscharakteristik einer Betätigungseinheit durch ein mindestens einmaliges Betätigen eines Betätigungsmittels der Betätigungseinheit ermittelt werden, indem
- fortlaufend Betätigungswege des Betätigungsmittels ermittelt werden,
- den ermittelten Betätigungswegen jeweils eine Betätigungsgeschwindigkeits-Kenngröße zugeordnet wird, so dass fortlaufend Wertepaare aus dem ermittelten Betätigungsweg und der zugeordneten Betätigungsgeschwindigkeits-Kenngröße gebildet werden, wobei die Betätigungsgeschwindigkeits-Kenngröße in Abhängigkeit der Betätigungsgeschwindigkeit des Betätigungsmittels am Betätigungsweg gebildet wird, und
- anhand der gebildeten Wertepaare geprüft wird, ob signifikante Änderungen in der Betätigungsgeschwindigkeit auftreten, wobei den Betätigungswegen, an denen signifikante Änderungen in der Betätigungsgeschwindigkeit auftreten, Sprünge und/oder Knickpunkte in der Betätigungscharakteristik zugeordnet werden.

Dabei wird erfindungsgemäß erkannt, dass sich aufgrund einer Änderung der Betätigungscharakteristik in den Sprüngen und/oder Knickpunkten eine veränderte Betätigungskraft vom Fahrer aufzubringen ist, um das Betätigungsmittel zu betätigen. Betätigt der Fahrer das Betätigungsmittel mit einer bestimmten Betätigungsgeschwindigkeit, kann er diese an den Sprüngen bzw. Knickpunkten jedoch nicht halten, da er die Änderung in der Betätigungskraft nicht sofort adaptierten kann. Demnach tritt eine Änderung in der Betätigungsgeschwindigkeit auf, was über die Betätigungsgeschwindigkeits-Kenngröße erfasst werden kann. Dies kann jedoch nicht nur bei einem manuellen Betätigen durch den Fahrer auftreten, sondern auch bei einer automatisierten Betätigung, bei der die Kraftänderung ebenfalls nicht instantan adaptiert werden kann.

Dabei wird davon ausgegangen, dass die Betätigungseinheit über das Betätigungsmittel manuell oder automatisiert betätigt werden kann, wobei durch die Betätigungscharakteristik unterschiedliche Betätigungsbereiche definiert werden, die durch die Sprünge bzw. Knickpunkte voneinander getrennt sind, wobei in den Betätigungsbereichen jeweils unterschiedliche Betätigungskräfte zum Betätigen des Betätigungsmittels eingestellt sind.

Vorteilhafterweise kann das Verfahren somit fortlaufend durchgeführt werden, sobald das Betätigungsmittel betätigt wird, so dass eine Kalibrierung auch dann stattfinden kann, wenn die Betätigungseinheit im Fahrzeug bereits montiert ist. Das Verfahren greift dazu lediglich auf den Betätigungsweg und die Betätigungsgeschwindigkeit bzw. die Betätigungsgeschwindigkeits-Kenngröße zurück, so dass es einfach durchzuführen ist. Insbesondere kann das Verfahren dadurch nach einer Erstinstallation aber auch nach einer Nachrüstung oder während des Betriebes zum Ausgleichen von Verschleiß durchgeführt werden, d.h. wenn sich die Betätigungscharakteristik verändert hat. Wird also für den Einlernvorgang auf die Betätigungen des Betätigungsmittels während des Betriebes des Fahrzeuges zurückgegriffen, kann ein aufwändiger Kalibriervorgang vor der Inbetriebnahme wie im Stand der Technik, z.B. am Bandende, vorteilhafterweise entfallen.

Gemäß einer bevorzugten Weiterbildung ist vorgesehen, dass als Betätigungsgeschwindigkeits-Kenngröße direkt die Betätigungsgeschwindigkeit verwendet wird und diese vorzugsweise aus dem Betätigungsweg hergeleitet wird, insbesondere durch Ableiten des Betätigungsweges und/oder durch Bilden eines Differenzenquotienten. Dadurch kann das Verfahren weiter vereinfacht werden, da lediglich der Betätigungsweg für die Betätigungen fortlaufend zu erfassen ist, um auf das Vorliegen von Sprüngen bzw. Knickpunkten zu schließen. Dabei kann der zeitliche Verlauf der Betätigungsgeschwindigkeit bereits Auskunft über eine Änderung der Betätigungskraft aufgrund von Sprüngen und/oder Knickpunkten in der Betätigungscharakteristik geben, beispielsweise wenn als signifikante Änderung eine abfallende oder eine ansteigende Flanke in dem zeitlichen Verlauf der Betätigungsgeschwindigkeit vorliegt.

Gemäß einer weiteren bevorzugten Ausbildung ist ergänzend oder alternativ vorgesehen, als Betätigungsgeschwindigkeits-Kenngröße eine Betätigungsbeschleunigung zu verwenden, die die zeitliche Änderung der Betätigungsgeschwindigkeit charakterisiert und somit in Abhängigkeit der Betätigungsgeschwindigkeit gebildet wird. Die Betätigungsbeschleunigung kann hierbei vorzugsweise aus einer Ableitung und/oder einem Differenzenquotienten der Betätigungsgeschwindigkeit bzw. aus einer doppelten Ableitung/Differenzenquotienten des Betätigungsweges gebildet werden. Die Betätigungsbeschleunigung kann vorteilhafterweise ebenfalls Auskunft über das Maß der Änderung der Betätigungsgeschwindigkeit geben, so dass zur Ermittlung einer signifikanten Änderung der Betätigungsgeschwindigkeit aufgrund von Sprüngen und/oder Knickpunkten beispielsweise ermittelt werden kann, ob für bestimmte Betätigungswege ein Beschleunigungsmaximum oder ein Beschleunigungsminimum vorliegt, da an den Sprüngen und/oder den Knickpunkten maximale Veränderungen in der Betätigungsgeschwindigkeit zu erwarten sind. Die Betätigungsbeschleunigung kann somit ebenfalls darüber Aufschluss geben, ob in der Betätigungsgeschwindigkeit signifikante Änderungen auftreten.

Es können auch unterschiedliche Betätigungsgeschwindigkeits-Kenngrößen kombiniert werden, um z.B. ein Ergebnis zu plausibilisieren. So können Betätigungswege, an denen signifikante Änderungen in der Betätigungsgeschwindigkeit aus der Betätigungsgeschwindigkeit hergeleitet werden, mit Betätigungswegen, für die signifikante Änderungen in der Betätigungsgeschwindigkeit aus der Betätigungsbeschleunigung folgen, verglichen und entsprechend korrigiert werden oder umgekehrt.

Gemäß einer weiteren Ausführung ist vorgesehen, dass der Betätigungsweg über ein von der Betätigungseinheit in Abhängigkeit der Betätigung erzeugtes Betätigungssignal ausgegeben wird, wobei der Betätigungsweg vorzugsweise durch einen Wegsensor erfasst wird, der in irgendeiner Weise die Auslenkung des Betätigungsmittels aufgrund der Betätigung erfasst. Dadurch kann der Betätigungsweg bzw. die daraus folgende Betätigungsgeschwindigkeits-Kenngröße überall im Fahrzeug analysiert werden, um gemäß der Erfindung die Sprünge bzw. Knickpunkte in der Betätigungscharakteristik zu ermitteln. Gemäß einer bevorzugten Weiterbildung ist es dadurch möglich, dass das Verfahren nicht in der Betätigungseinheit durchgeführt wird. Dadurch können ein Auswertemodul und/oder auch eine Speichereinheit in der Betätigungseinheit entfallen. Dennoch ist ein nachträgliches Ermitteln der Sprünge bzw. der Knickpunkte bei einer Nachrüstung bzw. einem Austausch der Betätigungseinheit in einfacher Weise möglich.

Gemäß einer weiteren Ausführung ist vorgesehen, dass die Betätigungscharakteristik durch eine Federkennlinie vorgegeben wird, wobei die Federkennlinie durch Federn in der Betätigungseinheit bestimmt wird, wobei die Federn einer Betätigung des Betätigungsmittels in den jeweiligen Betätigungsbereichen unterschiedlich stark entgegenwirken und zwischen den Betätigungsbereichen Sprünge und/oder Knickpunkte in der Federkennlinie vorliegen. In der Federkennlinie sind dabei alle Federn erfasst, die einen Einfluss auf die aufzubringende Betätigungskraft haben. Die Betätigungseinheit kann somit auch pneumatische Bauteile umfassen, in denen Federn angeordnet sind, die der Betätigung des Betätigungsmittels entgegenwirken. Dadurch wird ein bestimmtes Pedalfeeling bzw. Betätigungsfeeling erreicht, da in den unterschiedlichen Betätigungsbereichen unterschiedliche Betätigungskräfte aufzuwenden sind. Aus dieser durch die Federkennlinie ausgebildeten Betätigungscharakteristik können durch das erfindungsgemäße Verfahren in einfacher Weise zumindest Sprünge und/oder Knickpunkte erfasst werden. Die Betätigungscharakteristik kann in vergleichbarer Form auch anders als durch eine Federkennlinie vorgegeben werden. Auch dann können durch das erfindungsgemäße Verfahren Sprünge und/oder Knickpunkte in der Betätigungscharakteristik erfasst werden, die eine Rückwirkung auf die Betätigungskraft haben.

Vorzugsweise ist weiterhin vorgesehen, dass bei der Ermittlung der Wertepaare und/oder bei der Prüfung auf signifikante Änderung in der Betätigungsgeschwindigkeit lediglich die Wertepaare berücksichtigt werden, für die der Betätigungsweg in einem bestimmten Betätigungsintervall und/oder die Betätigungsgeschwindigkeit in einem bestimmten Geschwindigkeitsintervall und/oder die Betätigungsbeschleunigung in einem bestimmten Beschleunigungsintervall liegen. Demnach werden lediglich die Betätigungen berücksichtigt, in denen eine signifikante Änderung in der Betätigungsgeschwindigkeit infolge eines Sprunges bzw. eines Knickpunktes in der Betätigungscharakteristik zu erwarten ist. Dadurch können Rechenaufwand und Speicherbedarf reduziert werden, da nicht oder weniger relevante Ereignisse unberücksichtigt bleiben. Das Betätigungsintervall und/oder das Geschwindigkeitsintervall und/oder das Beschleunigungsintervall kann hierbei beispielsweise anhand einer Standard-Betätigungscharakteristik mit üblicherweise vorkommenden Sprüngen bzw. Knickpunkten für die jeweilige Art der Betätigungseinheit festgelegt werden und welche Betätigungsgeschwindigkeiten bzw. Betätigungsbeschleunigungen daraus zu erwarten sind.

Vorzugsweise ist außerdem vorgesehen, dass bei der Ermittlung der Wertepaare und/oder bei der Prüfung auf signifikante Änderung in der Betätigungsgeschwindigkeit lediglich auf die Wertepaare zurückgegriffen wird, für die die Betätigungsgeschwindigkeit zumindest für ein Mindest-Betätigungsintervall oberhalb eines Geschwindigkeits-Grenzwertes verbleibt. Dadurch wird festgelegt, dass nur diejenigen Wertepaare berücksichtigt werden, die aus einer zumindest teilweise durchgehenden Betätigung des Betätigungsmittels resultieren und aus denen demnach eine signifikante Änderung infolge eines Sprunges und/oder Knickpunktes in der Betätigungscharakteristik ermittelt werden kann. Auch dadurch können Rechenaufwand und Speicherbedarf reduziert werden, da nicht oder weniger relevante Ereignisse unberücksichtigt bleiben.

Gemäß einer bevorzugten Weiterbildung ist vorgesehen, dass bei der Prüfung auf signifikante Änderungen in der Betätigungsgeschwindigkeit festgestellt wird, ob bei einem bestimmten Betätigungsweg eine abfallende Flanke in der Betätigungsgeschwindigkeit und/oder eine ansteigende Flanke in der Betätigungsgeschwindigkeit auftritt. Dies spricht dafür, dass bei einem Belasten bzw. einem Entlasten des Betätigungsmittels aufgrund eines Sprunges und/oder Knickpunktes in der Betätigungscharakteristik zwangsläufig eine Veränderung der Betätigungsgeschwindigkeit vorliegt.

Vorzugsweise ist weiterhin vorgesehen, dass bei der Prüfung auf signifikante Änderung in der Betätigungsgeschwindigkeit festgestellt wird, an welchem Betätigungsweg sich ein Beschleunigungsmaximum oder ein Beschleunigungsminimum befindet. Dies kann ebenfalls als Sprung und/oder als Knickpunkt in der Betätigungscharakteristik identifiziert werden, da sich die Betätigungsgeschwindigkeit aufgrund der Kraftänderung betragsmäßig maximal verändert. Vorzugsweise kann hierbei vorgesehen sein, die Beschleunigungsmaxima und Beschleunigungsminima bereichsweise über mehrere Betätigungen hinweg zu mitteln und ein gemitteltes Beschleunigungsmaximum bzw. ein gemitteltes Beschleunigungsminimum auszugeben. Der dem jeweiligen Beschleunigungsmittelwert zugeordnete Betätigungsweg kann dann wiederum einem Sprung und/oder einem Knickpunkt in der Betätigungscharakteristik zugeordnet werden. Dadurch kann die Genauigkeit der Ermittlung weiter verbessert werden.

Um Fehlerkennungen aufgrund von systematischen Ausreißern oder einem Rauschen im Signal zu vermeiden, kann vorzugsweise vorgesehen sein, den zeitlichen Verlauf des Betätigungsweges und/oder der Betätigungsgeschwindigkeit und/oder der Betätigungsbeschleunigung zu filtern, z.B. durch "moving average".

Alternativ zu der Auswertung der Betätigungsbeschleunigung bzw. der Betätigungsgeschwindigkeit für eine einzelne Betätigung des Betätigungsmittels kann gemäß einer bevorzugten Ausbildung vorgesehen sein, dass ein Histogramm für die fortlaufend gebildeten Wertepaare von Betätigungsweg und Betätigungsgeschwindigkeit bzw. Betätigungsweg und Betätigungsbeschleunigung erstellt wird, wobei dazu für jedes gebildete Wertepaar eine Häufigkeit für das Auftreten dieses Wertepaares beim Betätigen des Betätigungsmittels ermittelt und dem Wertepaar diese Häufigkeit zugeordnet wird; und - das Histogramm bewertet wird, indem geprüft wird, ob sich Wertepaare für bestimmte Betätigungswege häufen, wobei den Betätigungswegen, an denen sich Wertepaare häufen, als signifikante Änderungen in der Betätigungsgeschwindigkeit identifiziert werden, wobei diesen signifikanten Änderungen in der Betätigungsgeschwindigkeit Sprünge und/oder Knickpunkte in der Betätigungscharakteristik zugeordnet werden.

Somit werden Wertepaare über mehre Betätigungen hinweg quasi miteinander verknüpft und dadurch eine neue Information für die Bewertung herangezogen, die Häufigkeit des Auftretens eines Wertepaares. Wird für einen bestimmten Betätigungsweg ein Wertepaar häufiger erfasst, so tritt die jeweilige Betätigungsgeschwindigkeits-Kenngröße, d.h. die Betätigungsgeschwindigkeit bzw. die Betätigungsbeschleunigung an diesem Betätigungsweg häufiger auf. Dies hat den Vorteil, dass immer wieder auftretende Änderungen, d.h. mit hoher Häufigkeit, von willkürlichen Änderungen, d.h. mit geringer Häufigkeit, in der Betätigungsgeschwindigkeit unterschieden werden können. Diese sich häufenden Änderungen in der Betätigungsgeschwindigkeit können hierbei aus der Betätigungsgeschwindigkeit selbst, dann in Form von häufig wiederkehrenden Punkten auf einer ansteigenden oder einer absteigenden Flanke, oder aus der Betätigungsbeschleunigung, dann in Form von häufig wiederkehrenden Beschleunigungsmaxima oder Beschleunigungsminima, entsprechend einer starken Änderung in der Betätigungsgeschwindigkeit, extrahiert werden. Variierende Betätigungsgeschwindigkeiten, die nicht aufgrund von Sprüngen und/oder Knickpunkten auftreten, können also entsprechend aus der fortlaufend ermittelten Betätigungsgeschwindigkeit bzw. der fortlaufend ermittelten Betätigungsbeschleunigung identifiziert werden, da diese mit geringerer Häufigkeit auftreten, und unberücksichtigt bleiben.

Vorzugsweise kann weiterhin vorgesehen sein, dass für den Fall, dass bei der Prüfung auf signifikante Änderung in der Betätigungsgeschwindigkeit aus dem Histogramm oder aus den Wertepaaren einzelner Betätigungen kein eindeutiger Hinweis auf Sprünge und/oder Knickpunkte in der Betätigungscharakteristik gefunden werden kann, weil z.B. zu wenige Betätigungen vorliegen, vorerst auf die Standard-Betätigungscharakteristik zurückgegriffen wird, die z.B. einer Standard-Federkennlinie entspricht, in der die Lage der Sprünge und/oder Knickpunkte bekannt sind.

Gemäß einer weiteren Ausführung ist vorgesehen, dass das Betätigen des Betätigungsmittels beinhaltet, das Betätigungsmittel mindestens einmal zu belasten und/oder mindestens einmal zu entlasten, wobei sich in der Auswertung unterschiedliche Vorzeichen der Betätigungsgeschwindigkeit ergeben. Die Sprünge bzw. Knickpunkte lassen sich dabei in beide Betätigungsrichtungen erfassen. Um Rechenaufwand zu sparen, kann aber auch nur eine Richtung betrachtet werden.

Gemäß einer bevorzugten Weiterbildung ist vorgesehen, dass nach dem Ermitteln der Sprünge bzw. Knickpunkte in der Betätigungscharakteristik eine Anforderungskennlinie des Bremsbedarfs bzw. des Antriebsbedarfs erstellt wird, wobei die Anforderungskennlinie den durch die Sprünge bzw. Knickpunkte voneinander getrennten Betätigungsbereichen unterschiedliche Abhängigkeiten zwischen umzusetzenden Soll-Anforderungen (Abbremsung oder Beschleunigung) und dem entsprechend vorgegebenen Betätigungsweg zuordnet. In der Anforderungskennlinie sind den Betätigungswegen, an denen Sprünge bzw. Knickpunkte in der Betätigungscharakteristik auftreten, Übergangsbereiche zugeordnet, die aus der erfassten Lage der Sprünge bzw. Knickpunkte folgen. Dadurch kann vorteilhafterweise auf die vorab ermittelten Sprünge bzw. Knickpunkte zurückgegriffen werden, um festzulegen, welche Soll-Anforderungen vor und nach den Übergangsbereichen in Abhängigkeit des sensierten Betätigungsweges ausgesteuert werden sollen.

Erfindungsgemäß ist weiterhin ein Auswertemodul zur Durchführung des erfindungsgemäßen Verfahrens vorgesehen, wobei das Auswertemodul ausgebildet ist,
- fortlaufend Betätigungswege des Betätigungsmittels zu ermitteln,
- den ermittelten Betätigungswegen jeweils eine Betätigungsgeschwindigkeits-Kenngröße zuzuordnen, so dass fortlaufend Wertepaare aus dem ermittelten Betätigungsweg und der zugeordneten Betätigungsgeschwindigkeits-Kenngröße gebildet werden können, wobei die Betätigungsgeschwindigkeits-Kenngröße in Abhängigkeit der Betätigungsgeschwindigkeit des Betätigungsmittels am Betätigungsweg gebildet werden kann, und
- anhand der gebildeten Wertepaare geprüft werden kann, ob signifikante Änderungen in der Betätigungsgeschwindigkeit auftreten, wobei den Betätigungswegen, an denen signifikante Änderungen in der Betätigungsgeschwindigkeit auftreten, Sprünge und/oder Knickpunkte in der Betätigungscharakteristik zugeordnet werden können.

Vorzugsweise ist dabei vorgesehen, dass das Auswertemodul Bestandteil einer Steuereinrichtung eines Fahrzeuges ist und/oder nicht in der Betätigungseinheit angeordnet ist. Die Umsetzung kann hierbei softwareseitig und/oder hardwareseitig erfolgen, z.B. als Software- bzw. Hardware-Erweiterung in der jeweiligen Steuereinheit.

Erfindungsgemäß ist weiterhin ein Fahrzeug mit dem Auswertemodul vorgesehen, wobei das Fahrzeug mindestens eine Betätigungseinheit aufweist, wobei die mindestens eine Betätigungseinheit über einen Kommunikationspfad mit dem Auswertemodul verbunden ist zum Übertragen des Betätigungsweges an das Auswertemodul.

Bevorzugt ist dabei vorgesehen, dass das Auswertemodul nicht in der Betätigungseinheit angeordnet ist und/oder das Auswertemodul Bestandteil einer Steuereinrichtung des Fahrzeuges ist. Demnach kann das Verfahren vorzugsweise außerhalb der Betätigungseinheit stattfinden, so dass diese kein Auswertemodul bzw. keine Speichereinheit zum Abspeichern einer Betätigungskennlinie benötigt.

Vorzugsweise ist die Betätigungseinheit eine Brems-Betätigungseinheit mit einem fußbetätigten Brems-Pedal oder einem handbetätigten ParkbremsHebel oder einem Streckbrems-Hebel als Betätigungsmittel in einem elektrisch steuerbaren Bremssystem und/oder eine Antriebs-Betätigungseinheit mit einem Antriebs-Pedal (Gas-Pedal) als Betätigungsmittel eines elektrisch steuerbaren Antriebssystems. Es sind aber auch weitere Betätigungseinheiten und Betätigungsmittel möglich. Als Betätigungseinheit wird hierbei die gesamte Einheit aus Betätigungsmittel und damit zusammenhängenden Komponenten verstanden. Somit sind zumindest all diejenigen Komponenten erfasst, die einen Einfluss auf die Betätigungscharakteristik haben. Bei einem elektropneumatischen Fußbremsventil gehören beispielsweise auch die pneumatischen Komponenten dazu, die ebenfalls Federn aufweisen können und somit an der Betätigungscharakteristik teilhaben. Bei anderen Betätigungsarten gilt dies analog.

Die Erfindung wird im Folgenden anhand von Zeichnungen näher erläutert. Es zeigen:
- Fig. 1: ein Fahrzeug mit einer Brems-Betätigungseinheit und einer Antriebs-Betätigungseinheit;
- Fig. 2a: eine beispielhafte Anforderungskennlinie für eine bestimmte Federkennlinie;
- Fig. 2b: aus Betätigungssignalen folgende Kennlinien;
- Fig. 2c: eine Kombination der Kennlinien gemäß Fig. 2b aus unterschiedlichen Messungen;
- Fig 2d: eine Häufigkeitsverteilung für die Kennlinien gemäß Fig. 2c; und
- Fig. 3: ein Flussdiagramm des erfindungsgemäßen Verfahrens.

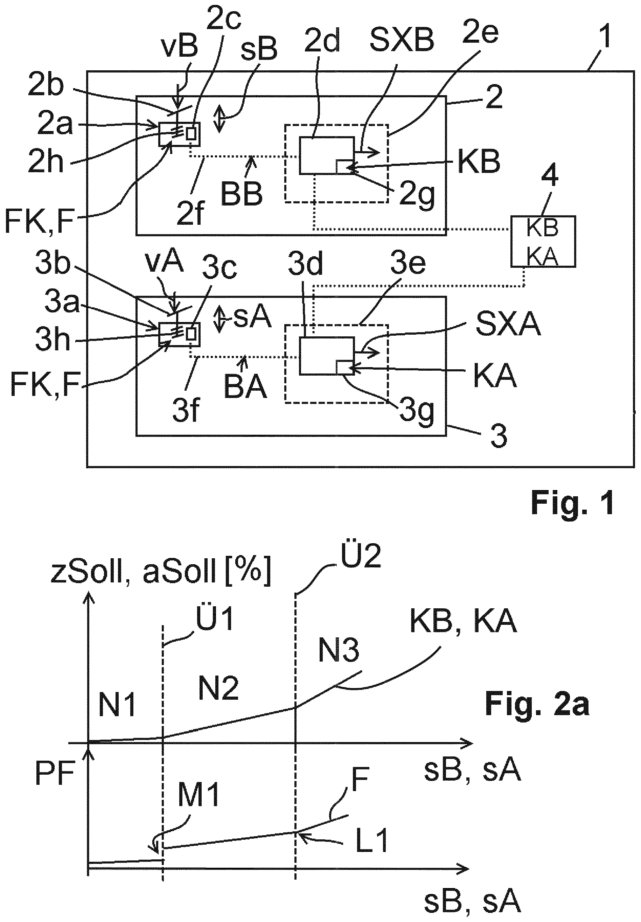

Gemäß Figur 1 ist ein Fahrzeug 1, insbesondere Nutzfahrzeug 1, dargestellt, das ein elektrisch steuerbares Bremssystem 2 und ein elektrisch steuerbares Antriebssystem 3 aufweist. Als Teil des Bremssystems 2 ist eine Brems-Betätigungseinheit 2a mit einem Brems-Betätigungsmittel 2b, beispielsweise einem Bremspedal oder einem Parkbremshebel oder einem Streckbremshebel, vorgesehen, das von einem Fahrer manuell oder von einem Betätigungssystem automatisiert betätigt werden kann und dabei um einen bestimmten Brems-Betätigungsweg sB ausgelenkt werden kann. In entsprechender Weise kann ein Antriebs-Betätigungsmittel 3b, z.B. ein Gas-Pedal, einer Antriebs-Betätigungseinheit 3a des Antriebssystems 3 um einen Antriebs-Betätigungsweg sA manuell oder automatisiert ausgelenkt werden. Der jeweilige Betätigungsweg sB, sA, kann über einen Wegsensor 2c, 3c in der jeweiligen Betätigungseinheit 2a, 3a ermittelt werden.

In Abhängigkeit des jeweiligen Betätigungsweges sB, sA wird ein Brems-Betätigungssignal BB bzw. ein Antriebs-Betätigungssignal BA an ein Brems-Auswertemodul 2d bzw. ein Antriebs-Auswertemodul 3d ausgegeben. Das Brems-Auswertemodul 2d kann hierbei Bestandteil einer Brems-Steuereinrichtung 2e (ECU) und das Antriebs-Auswertemodul 3d Bestandteil einer Antriebs-Steuereinrichtung 3e (ECU) sein. Die jeweilige Steuereinrichtung 2e, 3e (ECU) dient hierbei der übergeordneten Steuerung des Bremssystems 2 zur Umsetzung einer Verzögerungsanforderung (Fahrzeug-Soll-Verzögerung zSoll) bzw. des Antriebssystems 3 zur Umsetzung einer Beschleunigungsanforderung (Fahrzeug-Beschleunigung aSoll). Die Auswertemodule 2d, 3d können aber auch an einer anderen Stelle im Fahrzeug 1 angeordnet sein.

Dem jeweiligen Auswertemodul 2d, 3d wird gemäß der Erfindung über einen bestimmten Kommunikationspfad 2f, 3f (drahtlos oder drahtgebunden) ein Betätigungssignal BB, BA übermittelt, das den jeweiligen Betätigungsweg sB, sA charakterisiert bzw. enthält. Zur Umsetzung einer dem Betätigungsweg sB, sA entsprechenden Soll-Anforderung zSoll, aSoll wird vom jeweiligen Auswertemodul 2d, 3d auf eine abgelegte Anforderungskennlinie KB, KA (s. Fig. 2a) zurückgegriffen, die dem Betätigungsweg sB, sA eine bestimmte gewünschte Soll-Anforderung zSoll, aSoll zuordnet, z.B. eine Fahrzeug-Soll-Verzögerung zSoll (Bremssystem 2) bzw. eine Fahrzeug-Soll-Beschleunigung aSoll (Antriebssystem 3). Diese Anforderungskennlinie KB, KA kann beispielsweise direkt im Auswertemodul 2d, 3d in einer Speichereinheit 2g, 3g abgelegt sein oder auch in einer externen Speichereinheit 4.

Eine Brems-Anforderungskennlinie KB berücksichtigt hierbei bereits die Betätigungscharakteristik F der Brems-Betätigungseinheit 2a. Demnach wird eine Betätigungskennlinie darin bereits erfasst, wobei die Betätigungskennlinie angibt, welche Betätigungskraft PF bei einem bestimmten Brems-Betätigungsweg sB aufzuwenden ist. Diese Betätigungskennlinie kann Sprünge Mi und/oder Knickpunkte Li aufweisen, an denen sich das Verhalten der Brems-Betätigungseinheit 2a verändert und die demnach ebenfalls in der Brems-Anforderungskennlinie KB berücksichtigt werden. Das sich verändernde Verhalten ergibt sich dabei aus einer Federkennlinie FK (s. Fig. 2a) der Brems-Betätigungseinheit 2a, die die Betätigungscharakteristik F mitbestimmt und die durch eine oder mehrere Federn 2h in der Brems-Betätigungseinheit 2a festgelegt wird, wobei die Federn 2h der Betätigung des Brems-Betätigungsmittels 2b je nach Brems-Betätigungsweg sB unterschiedlich stark entgegenwirken. In der Federkennlinie FK werden hierbei jegliche Federn 2h erfasst, die Auswirkungen auf die Betätigungscharakteristik F bzw. die aufzuwendende Betätigungskraft PF haben. Die Brems-Betätigungseinheit 2a umfasst alle diese Federn 2h.

Demnach können je nach Anzahl an Sprüngen Mi und/oder Knickpunkten Li unterschiedliche Betätigungsbereiche Nk definiert werden, in denen jeweils unterschiedliche Betätigungskräfte PF zur Auslenkung des jeweiligen Brems-Betätigungsmittels 2b erforderlich sind, die der Betätigung entgegengesetzt werden. Dadurch wird ein bestimmtes Pedalfeeling bzw. Betätigungsfeeling erreicht, wobei über die Brems-Anforderungskennlinie KB festgelegt werden kann, welche Fahrzeugreaktion bzw. welche Fahrzeug-Soll-Verzögerung zSoll in den jeweiligen Betätigungsbereichen Nk folgen soll, indem eine entsprechende Zuordnung stattfindet. In der Brems-Anforderungskennlinie KB sind den Sprüngen Mi und/oder den Knickpunkten Li bzw. den jeweiligen Brems-Betätigungswegen sB, an denen diese auftreten, Übergangsbereiche Üi zugeordnet, in denen die einzelnen Betätigungsbereiche Nk ineinander übergehen. Die jeweilige Fahrzeug-Soll-Verzögerung zSoll kann dann über ein Brems-Anforderungssignal SXB zur Umsetzung durch das elektronisch gesteuerte Bremssystem 2 ausgegeben werden.

Die Kalibrierung des Brems-Betätigungssignals BB findet somit nicht wie im Stand der Technik in der Brems-Betätigungseinheit 2a selbst durch Anwendung einer vorab eingelernten Betätigungskennlinie statt, sondern in dem Brems-Auswertemodul 2d über eine die Betätigungskennlinie bereits automatisch berücksichtigende Brems-Anforderungskennlinie KB. Dadurch kann auf eine Speichereinheit in der Brems-Betätigungseinheit 2a sowie eine vorab durchgeführte Kalibrierung verzichtet werden, wodurch der Platz- und Kostenaufwand minimiert werden kann.

Gleiches gilt im Übrigen für die Antriebs-Betätigungseinheit 3a, die Federn 3h aufweist und dadurch eine bestimmte Betätigungscharakteristik F gemäß einer bestimmten Federkennlinie FK mit Sprüngen Mi und/oder Knickpunkten Li ausbildet. Das Antriebs-Betätigungssignal BA der Antriebs-Betätigungseinheit 3a wird über eine die Betätigungscharakteristik F berücksichtigende Antriebs-Anforderungskennlinie KA mit Übergangsbereichen Üi in dem Antriebs-Auswertemodul 3d kalibriert, so dass eine daraus folgende Fahrzeug-Soll-Beschleunigung aSoll über ein Antriebs-Anforderungssignal SXA zur Umsetzung durch das Antriebssystem 3 ausgegeben werden kann.

Um bei diesen Ausführungen zu gewährleisten, dass bei einem Austausch der Betätigungseinheiten 2a, 3a bzw. der Steuereinrichtungen 2e, 3e bzw. der Auswertemodule 2d, 3d eine aktuelle Anforderungskennlinie KB, KA vorliegt, die die spezifischen Sprünge Mi und/oder Knickpunkte Li aus der Betätigungscharakteristik F bzw. der Betätigungskennlinie der jeweiligen Betätigungseinheit 2a, 3a berücksichtigt, ist gemäß der Erfindung vorgesehen, die Anforderungskennlinie KB, KA im Betrieb der Betätigungseinheit 2a, 3a einzulernen. Dazu wird der Betätigungsweg sB, sA, der bei manuellen oder automatisierten Betätigungen des Betätigungsmittels 2b, 3b eingestellt wird, näher analysiert.

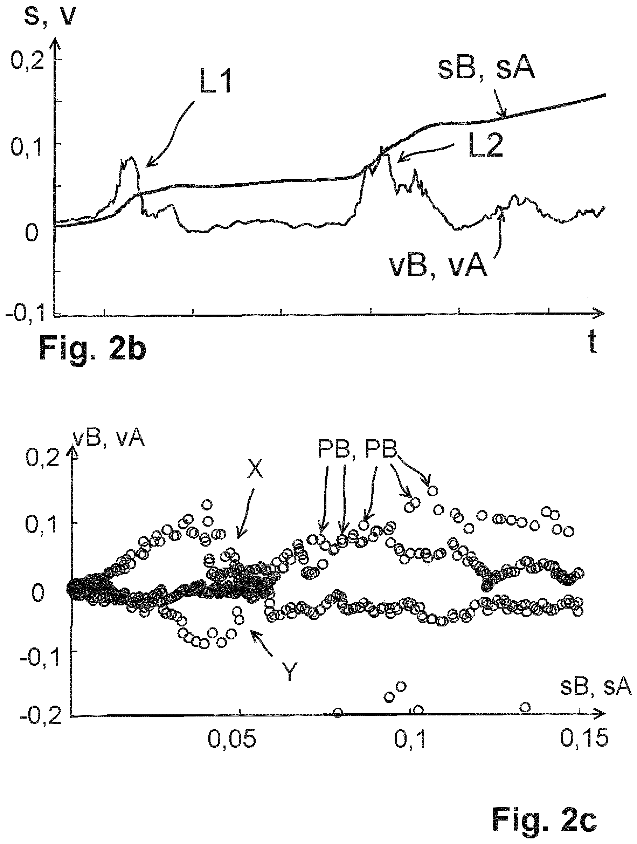

Dabei wurde erkannt, dass bei einer manuellen oder automatisierten Betätigung des jeweiligen Betätigungsmittels 2b, 3b durch den Fahrer bzw. das Betätigungssystem, wenn sich der Betätigungsweg sB, sA einem der Sprünge Mi und/oder Knickpunkte Li in der Betätigungscharakteristik F nähert, d.h. bei einer Änderung in der Federkennlinie FK des jeweiligen Betätigungsmittels 2b, 3b, gleichzeitig auch Änderungen in einer Betätigungsgeschwindigkeit vB, vA des jeweiligen Betätigungsmittels 2b, 3b auftreten (s. Fig. 2b).

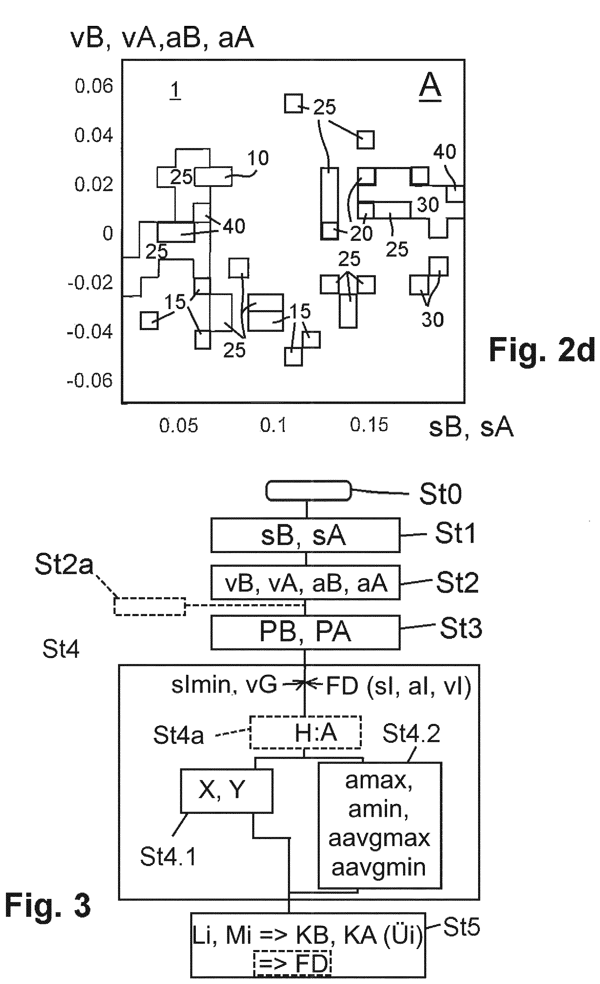

Dies resultiert daraus, dass der Fahrer bzw. das Betätigungssystem an den Sprüngen Mi und/oder Knickpunkten Li der Betätigungscharakteristik F in der Regel nicht in der Lage ist, die Betätigungsgeschwindigkeit vB, vA exakt beizubehalten, wenn sich die aufzubringende Betätigungskraft PF ändert. Er kann die Kraftänderung demnach nicht sofort adaptieren, wobei beispielsweise bei einer Erhöhung der Betätigungskraft PF ab einem der Sprünge Mi und/oder Knickpunkte Li eine Reduzierung der Betätigungsgeschwindigkeit vA, vB auftritt und bei einer Reduzierung der Betätigungskraft PF ab einem der Sprünge Mi und/oder Knickpunkte Li eine Erhöhung der Betätigungsgeschwindigkeit vA, vB auftritt. In beiden Fällen rechnet der Fahrer bzw. das automatisierte Betätigungssystem nicht mit einer Veränderung der Betätigungscharakteristik F bzw. der aufzuwendenden Betätigungskraft PF, wobei sich dies in einer Änderung der Betätigungsgeschwindigkeit vB, vA niederschlägt. Der Einlernvorgang kann vor diesem Hintergrund gemäß Fig. 3 wie folgt durchgeführt werden:
In einem anfänglichen Schritt St0 wird das Verfahren initialisiert, beispielsweise nach einem Austausch der Betätigungseinheit 2a, 3a oder nach einem bestimmten Zeitraum, um Verschleißerscheinungen entgegenzuwirken. In einem ersten Schritt St1 wird aus dem übermittelten Betätigungssignal BB, BA der jeweilige Betätigungsweg sB, sA über die Zeit t ermittelt (s. Fig. 2b). Aus dem zeitlichen Verlauf wird anschließend in einem zweiten Schritt St2 als Betätigungsgeschwindigkeits-Kenngröße die Betätigungsgeschwindigkeit vB, vA und/oder eine Betätigungsbeschleunigung aB, aA für jeden Betätigungsweg sB, sA ermittelt, z.B. durch einfaches und/oder doppeltes Ableiten des Betätigungsweges sB, sA bzw. durch einfaches und/oder doppeltes Bilden eines Differenzenquotienten Q. Bei einem Belasten des jeweiligen Betätigungsmittels 2b, 3b ist die Betätigungsgeschwindigkeit vB, vA positiv und bei einem Entlasten des jeweiligen Betätigungsmittels 2b, 3b negativ. In einer vereinfachten Variante können auch nur positive Werte für die Betätigungsgeschwindigkeit vB, vA betrachtet werden, d.h. nur ein Belasten des jeweiligen Betätigungsmittels 2b, 3b. Anschließend kann eine optionale Filterung des abgeleiteten Signals stattfinden (St2a).

Jedem Betätigungsweg sB, sA kann nun eine bestimmte Betätigungsgeschwindigkeits-Kenngröße, d.h. eine Betätigungsgeschwindigkeit vB, vA und/oder eine Betätigungsbeschleunigung aB, aA, zugeordnet werden, so dass in einem dritten Schritt St3 Wertepaare PB(sB, vB/aB), PA(sA, vA/aB) aus dem erfassten Betätigungsweg sB, sA und der zugeordneten Betätigungsgeschwindigkeit vB, vA bzw. Betätigungsbeschleunigung aB, aA gebildet werden können. Sowohl die Betätigungsgeschwindigkeit vB, vA als auch die Betätigungsbeschleunigung aB, aA können dabei herangezogen werden, um die Veränderung der Betätigungsgeschwindigkeit vB, vA aufgrund eines Sprunges Mi und/oder eines Knickes Li an einem bestimmten Betätigungsweg sA, sB zu bewerten.

Die Wertepaare PB, PA können gemäß Fig. 2c aufgetragen werden, wobei sich eine Punktewolke ergibt, wenn mehrere solcher Wertepaare PB, PA aufgetragen werden. Das Ermitteln von derartigen Wertepaaren PB, PA findet fortlaufend für ein oder mehrere Betätigungen des Betätigungsmittels 2b, 3b statt. Um zu ermitteln, ob Sprünge Mi und/oder Knicke Li in der Betätigungscharakteristik F vorliegen, ist zunächst in einem vierten Schritt St4 vorgesehen, anhand der gebildeten Wertepaare PB, PA zu prüfen, ob signifikante Änderungen in der Betätigungsgeschwindigkeit vB, vA auftreten.

Dies kann beispielsweise dadurch erfolgen, dass in einem ersten Teilschritt St4.1 für das Belasten des jeweiligen Betätigungsmittels 2b, 3b ermittelt wird, ob in der Betätigungsgeschwindigkeit vB, vA eine abfallende Flanke X (s. Fig. 2c) vorliegt, und/oder für das Entlasten des jeweiligen Betätigungsmittels 2b, 3b ermittelt wird, ob eine ansteigende Flanke Y vorliegt. Dies folgt daraus, dass bei einem Belasten des jeweiligen Betätigungsmittels 2b, 3b über einen Sprung Mi und/oder Knickpunkt Li hinweg eine Verringerung der Betätigungsgeschwindigkeit vB, vA zu erwarten ist, wenn sich die Betätigungskraft PF am Sprung Mi und/oder am Knickpunkt Li in der Belastungsrichtung erhöht, und bei einem Entlasten über denselben Sprung Mi und/oder Knickpunkt Li eine Erhöhung der Betätigungsgeschwindigkeit vB, vA zu erwarten ist, da sich die Betätigungskraft PF am Sprung Mi bzw. Knickpunkt Li entlang der Entlastungsrichtung verringert. Dies folgt wie bereits beschrieben aus der fehlenden Fähigkeit des Fahrers die Kraftänderung zu adaptieren. Die jeweiligen Flanken X, Y können hierbei unmittelbar aus dem zeitlichen Verlauf der Betätigungsgeschwindigkeit vB, vA ermittelt werden.

Ergänzend oder alternativ kann in einem zweiten Teilschritt St4.2 über die Betätigungsbeschleunigung aB, aA erkannt werden, ob für bestimmte Betätigungswege sB, sA ein Beschleunigungsmaximum amax oder ein Beschleunigungsminimum amin vorliegt. Der Betätigungsweg sB, sA, an dem sich ein Beschleunigungsmaximum amax oder ein Beschleunigungsminimum amin befindet, kann als Sprung Mi und/oder als Knickpunkt Li in der Betätigungscharakteristik F identifiziert werden, da sich die Betätigungsgeschwindigkeit vB, vA aufgrund der Kraftänderung fortlaufend und betragsmäßig maximal verändert. Ergänzend kann über mehrere Betätigungen auch ein gemitteltes Beschleunigungsmaximum aavgmax oder ein gemitteltes Beschleunigungsminimum aavgmin und der jeweils zugeordnete Betätigungsweg sB, sA ermittelt werden, um die Sprünge Mi und/oder Knickpunkte Li zu ermitteln und ggf. auch mit der Ermittlung über die Betätigungsgeschwindigkeit vB, vA zu plausibilisieren.

Um die Qualität der Bewertung zu erhöhen, kann ergänzend vorgesehen sein, dass in einem vorausgehenden Vor-Schritt St4a aus den gebildeten Wertepaaren PB, PA ein Histogramm H erstellt wird, das beispielhaft in Fig. 2d dargestellt ist. Das Histogramm H gibt hierbei eine Häufigkeitsverteilung der Wertepaare PB, PA an, d.h. mit welcher Häufigkeit A bei einer mehrfachen Betätigung des Betätigungsmittels 2b, 3b bei einem bestimmten Betätigungsweg sB, sA eine bestimmte Betätigungsgeschwindigkeit vB, vA und/oder eine Betätigungsbeschleunigung aB, aA ermittelt werden konnte. Je höher die Häufigkeit A für ein Quadrat bzw. eine bestimmtes Wertepaar PB, PA im Histogramm H ist, desto höher ist die in Fig. 2d beispielhaft angegebene Zahl.

Bei allen Auswertevarianten können vorzugsweise nur bestimmte Wertepaare PB, PA berücksichtigt werden. Beispielsweise können nur die Wertepaare PB, PA verwendet werden, bei denen der Betätigungsweg sB, sA innerhalb eines Betätigungsintervalls sI und/oder die Betätigungsgeschwindigkeit vB, vA innerhalb eines Geschwindigkeitsintervalls vl und/oder die Betätigungsbeschleunigung aB, aA innerhalb eines Beschleunigungsintervalls al liegen. Die Betätigungs-Intervalle sl, vl, al können hierbei in Abhängigkeit einer Standard-Betätigungscharakteristik FD mit bekannten Sprüngen Mi und/oder Knickpunkten Li festgelegt werden.

Weiterhin kann berücksichtigt werden, ob ein Wertepaar PB, PA zu einer durchgängigen Betätigungsmittel-Betätigung gehört. Dazu kann die Betätigungsgeschwindigkeit vB, vA über einen bestimmten Betätigungsweg sB, sA überwacht werden. Wird beispielsweise festgestellt, dass die Betätigungsgeschwindigkeit vB, vA zumindest für ein Mindest-Betätigungsintervall slmin oberhalb eines Geschwindigkeits-Grenzwertes vG verbleibt, so kann auf eine durchgängige Betätigungsmittel-Betätigung geschlossen werden. Dadurch können Wertepaare PB, PA, für die eine sehr geringe Änderung der Betätigungsgeschwindigkeit vB, vA an einem der Sprünge Mi und/oder Knickpunkte Li zu erwarten ist bzw. die keine Hinweise auf einen Sprung Mi und/oder Knickpunkt Li liefern können, bei der Bewertung bzw. Prüfung unberücksichtigt bleiben, wodurch Rechenzeit und der Speicherbedarf verringert werden können.

Aus der Prüfung kann somit in einem fünften Schritt St5 eine Zuordnung von Sprüngen Mi und/oder Knickpunkten Li in der Betätigungscharakteristik F zu einem bestimmten Betätigungsweg sB, sA, an dem eine abfallende Flanke Y und/oder eine ansteigende Flanke X und/oder ein Beschleunigungsmaximum amax und/oder ein Beschleunigungsminimum amin und/oder ein gemitteltes Beschleunigungsmaximum aavgmax und/oder ein gemitteltes Beschleunigungsminimum aavgmin auftreten, erfolgen. Im Histogramm H sind dabei im Bereich einer abfallenden Flanke Y und/oder einer ansteigenden Flanke X und/oder eines Beschleunigungsmaximums amax und/oder eines Beschleunigungsminimums amin und/oder eines gemittelten Beschleunigungsmaximums aavgmax und/oder eines gemittelten Beschleunigungsminimums aavgmin höhere Häufigkeiten A zu erwarten, da diese bzw. Wertepaare PB, PA mit diesen Werten der Betätigungsgeschwindigkeits-Kenngröße bei mehrfacher Betätigung des jeweiligen Betätigungsmittels 2b, 3b mit einer höheren Anzahl ermittelt werden. Dies kann bei der Erstellung der Anforderungskennlinie KB, KA entsprechend berücksichtigt werden, indem die Betätigungswege sB, sA, bei denen Sprünge Mi und/oder Knickpunkte Li erkannt wurden, einem Übergangsbereich Üi in der Anforderungskennlinie KB, KA zugeordnet werden. Den Betätigungsbereichen Nk zwischen den Sprüngen Mi und/oder den Knickpunkten Li bzw. den Übergangsbereichen Ük kann eine bestimmte Änderung der Fahrdynamik durch Festlegung einer Soll-Anforderung zSoll, aSoll in Abhängigkeit des Betätigungsweges sB, sA zugeordnet werden.

Vorzugsweise kann weiterhin vorgesehen sein, dass für den Fall, dass bei der Prüfung auf signifikante Änderung in der Betätigungsgeschwindigkeit vB, vA aus dem Histogramm H oder aus den Wertepaaren PB, PA einzelner Betätigungsmittel-Betätigungen kein eindeutiger Hinweis auf Sprünge Mi und/oder Knickpunkte Li in der Betätigungscharakteristik F gefunden werden kann, weil z.B. zu wenige Betätigungen vorliegen, vorerst auf die Standard-Betätigungscharakteristik FD zurückgegriffen wird, die z.B. einer Standard-Federkennlinie entspricht, in der die Lage der Sprünge Mi und/oder Knickpunkte Li bekannt sind.

### Bezugszeichenliste (Teil der Beschreibung)

- 1: Fahrzeug
- 2: elektrisch steuerbares Bremssystem
- 2a: Brems-Betätigungseinheit
- 2b: Brems-Betätigungsmittel
- 2c: Wegsensor der Brems-Betätigungseinheit 2a
- 2d: Brems-Auswertemodul
- 2e: Brems-Steuereinrichtung
- 2f: Kommunikationspfad im Bremssystem
- 2g: Brems-Speichereinheit
- 2h: Feder in der Brems-Betätigungseinheit
- 3: elektrisch steuerbares Antriebssystem
- 3a: Antriebs-Betätigungseinheit
- 3b: Antriebs-Betätigungsmittel
- 3c: Wegsensor der Antriebs-Betätigungseinheit 3a
- 3d: Antriebs-Auswertemodul
- 3e: Antriebs-Steuereinrichtung
- 3f: Kommunikationspfad im Antriebssystem
- 3g: Antriebs-Speichereinheit
- 3h: Federn in der Antriebs-Betätigungseinheit 3a
- 4: externe Speichereinheit
- A: Häufigkeit
- aSoll: Fahrzeug-Soll-Beschleunigung
- aB: Brems-Betätigungsbeschleunigung
- aA: Antriebs-Betätigungsbeschleunigung
- al: Beschleunigungsintervall
- amax: Beschleunigungsmaximum
- aavgmax: gemitteltes Beschleunigungsmaximum
- amin: Beschleunigungsminimum
- aavgmin: gemitteltes Beschleunigungsminimum
- BA: Antriebs-Betätigungssignal
- BB: Brems-Betätigungssignal
- F: Betätigungscharakteristik
- FK: Federkennlinie
- FD: Standard-Betätigungscharakteristik
- H: Histogramm
- KA: Antriebs-Anforderungskennlinie
- KB: Brems-Anforderungskennlinie
- Li: Knickpunkte in der Betätigungscharakteristik
- Mi: Sprünge in der Betätigungscharakteristik
- Nk: Betätigungsbereiche
- PB, PA: Wertepaare
- PF: Betätigungskraft
- Q: Differenzenquotient
- sA: Antriebs-Betätigungsweg
- sB: Brems-Betätigungsweg
- sl: Betätigungsintervall
- slmin: Mindest-Betätigungsintervall
- SXA: Antriebs-Anforderungssignal
- SXB: Brems-Anforderungssignal
- t: Zeit
- Üi: Übergangsbereich in der Anforderungskennlinie KB, KA
- vA: Antriebs-Betätigungsgeschwindigkeit
- vB: Brems-Betätigungsgeschwindigkeit
- vG: Geschwindigkeits-Grenzwert
- vl: Geschwindigkeitsintervall
- X: abfallende Flanke
- Y: ansteigende Flanke
- zSoll: Fahrzeug-Soll-Verzögerung
- i, k: Index
- St1, St2, St3, St4, St4a, St4.1, St4.2, St5: Schritte des Verfahrens

## Patentansprüche

1. Verfahren zum Ermitteln von Sprüngen (Mi) und/oder Knickpunkten (Li) in einer Betätigungscharakteristik (F) einer Betätigungseinheit (2a, 3a), wobei die Betätigungseinheit (2a, 3a) über ein Betätigungsmittel (2b, 3b) betätigt werden kann, wobei durch die Betätigungscharakteristik (F) unterschiedliche Betätigungsbereiche (Nk) definiert werden, die durch die Sprünge (Mi) und/oder Knickpunkte (Li) voneinander getrennt sind, wobei in den Betätigungsbereichen (Nk) jeweils unterschiedliche Betätigungskräfte (PF) zum Betätigen des Betätigungsmittels (2b, 3b) eingestellt sind, wobei die Sprünge (Mi) und/oder Knickpunkte (Li) durch Betätigen des Betätigungsmittels (2b, 3b) ermittelt werden, indem
- fortlaufend Betätigungswege (sB, sA) des Betätigungsmittels (2b, 3b) ermittelt werden (St1),
- den ermittelten Betätigungswegen (sB, sA) jeweils eine Betätigungsgeschwindigkeits-Kenngröße (vB, vA, aB, aA) zugeordnet wird (St2), so dass fortlaufend Wertepaare (PB, PA) aus dem ermittelten Betätigungsweg (sB, sA) und der zugeordneten Betätigungsgeschwindigkeits-Kenngröße (vB, vA, aB, aA) gebildet werden (St3), wobei die Betätigungsgeschwindigkeits-Kenngröße (vB, vA, aB, aA) in Abhängigkeit einer Betätigungsgeschwindigkeit (vB, vA) des Betätigungsmittels (2b, 3b) beim jeweiligen Betätigungsweg (sB, sA) gebildet wird, und
- anhand der gebildeten Wertepaare (PB, PA) geprüft wird, ob signifikante Änderungen (X, Y) in der Betätigungsgeschwindigkeit (vB, vA) vorliegen (St4), wobei den Betätigungswegen (sB, sA), an denen signifikante Änderungen (X, Y) in der Betätigungsgeschwindigkeit (vB, vA) vorliegen, Sprünge (Mi) und/oder Knickpunkte (Li) in der Betätigungscharakteristik (F) zugeordnet werden (St5).

2. Verfahren nach Anspruch 1, **dadurch gekennzeichnet, dass** als Betätigungsgeschwindigkeits-Kenngröße die Betätigungsgeschwindigkeit (vB, vA) verwendet wird, wobei die Betätigungsgeschwindigkeit (vB, vA) aus dem Betätigungsweg (sB, sA) hergeleitet wird, insbesondere durch Ableiten des Betätigungsweges (sB, sA) und/oder durch Bilden eines Differenzenquotienten (Q).

3. Verfahren nach Anspruch 1 oder 2, **dadurch gekennzeichnet, dass** bei der Prüfung auf signifikante Änderungen (X, Y) in der Betätigungsgeschwindigkeit (vB, vA) festgestellt wird, ob bei einem bestimmten Betätigungsweg (sB, sA) eine abfallende Flanke (X) in der Betätigungsgeschwindigkeit (vB, vA) und/oder eine ansteigende Flanke (Y) in der Betätigungsgeschwindigkeit (vB, vA) vorliegt (St4.1).

4. Verfahren nach einem der vorhergehenden Ansprüche, **dadurch gekennzeichnet, dass** als Betätigungsgeschwindigkeits-Kenngröße eine Betätigungsbeschleunigung (aB, aA) verwendet wird, wobei die Betätigungsbeschleunigung (aB, aA) die zeitliche Änderung der Betätigungsgeschwindigkeit (vB, vA) charakterisiert, wobei die Betätigungsbeschleunigung (aB, aA) aus dem Betätigungsweg (sB, sA) hergeleitet wird, insbesondere durch doppeltes Ableiten des Betätigungsweges (sB, sA) und/oder durch doppeltes Bilden eines Differenzenquotienten (Q).

5. Verfahren nach Anspruch 4, **dadurch gekennzeichnet, dass** bei der Prüfung auf signifikante Änderung (X, Y) in der Betätigungsgeschwindigkeit (vB, vA) festgestellt wird, bei welchem Betätigungsweg (sB, sA) sich ein Beschleunigungsmaximum (amax) oder ein Beschleunigungsminimum (amin) befindet (St4.2).

6. Verfahren nach Anspruch 5, **dadurch gekennzeichnet, dass** Beschleunigungsmaxima (amax) und Beschleunigungsminima (amin) über mehrere Betätigungen des Betätigungsmittels (2b, 3b) hinweg gemittelt werden und bei der Prüfung auf signifikante Änderung (X, Y) in der Betätigungsgeschwindigkeit (vB, vA) festgestellt wird, bei welchem Betätigungsweg (sB, sA) sich ein gemitteltes Beschleunigungsmaximum (aavgmax) oder ein gemitteltes Beschleunigungsminimum (aavgmin) befindet.

7. Verfahren nach einem der Ansprüche 4 bis 6, **dadurch gekennzeichnet, dass** signifikante Änderungen (X, Y) in der Betätigungsgeschwindigkeit (vB, vA), die aus Wertepaaren (PB, PA) aus dem ermittelten Betätigungsweg (sB, sA) und der zugeordneten Betätigungsgeschwindigkeit (vB, vA) folgen, mit signifikanten Änderungen (X, Y) in der Betätigungsgeschwindigkeit (vB, vA), die aus Wertepaaren (PB, PA) aus dem ermittelten Betätigungsweg (sB, sA) und der zugeordneten Betätigungsbeschleunigung (aB, aA) folgen, miteinander verglichen und/oder plausibilisiert und/oder korrigiert werden.

8. Verfahren nach einem der vorhergehenden Ansprüche, **dadurch gekennzeichnet, dass** der Betätigungsweg (sB, sA) über ein von der Betätigungseinheit (2a, 3a) in Abhängigkeit der Betätigung erzeugtes Betätigungssignal (BB, BA) ausgegeben wird, wobei der Betätigungsweg (sB, sA) vorzugsweise durch einen Wegsensor (2c, 3c) erfasst wird.

9. Verfahren nach einem der vorhergehenden Ansprüche, **dadurch gekennzeichnet, dass** die Betätigungscharakteristik (F) durch eine Federkennlinie (FK) vorgegeben wird, wobei die Federkennlinie (FK) durch Federn (2h, 3h) in der Betätigungseinheit (2a, 3a) bestimmt wird, wobei die Federn (2h, 3h) einer Betätigung des Betätigungsmittels (2b, 3b) in den jeweiligen Betätigungsbereichen (Nk) unterschiedlich stark entgegenwirken und zwischen den Betätigungsbereichen (Nk) Knickpunkte (Li) in der Federkennlinie (FK) vorliegen.

10. Verfahren nach einem der vorhergehenden Ansprüche, **dadurch gekennzeichnet, dass** bei der Ermittlung der Wertepaare (PB, PA) und/oder bei der Prüfung auf signifikante Änderung (X, Y) in der Betätigungsgeschwindigkeit (vB, vA) lediglich die Wertepaare (PB, PA) berücksichtigt werden, für die der Betätigungsweg (sB, sA) in einem oder in mehreren vorgegebenen Betätigungsintervallen (sl) und/oder die Betätigungsgeschwindigkeit (vB, vA) in einem oder in mehreren bestimmten Geschwindigkeitsintervallen (vl) und/oder die Betätigungsbeschleunigung (aB, aA) in einem oder in mehreren bestimmten Beschleunigungsintervallen (al) liegen.

11. Verfahren nach Anspruch 10, **dadurch gekennzeichnet, dass** das Betätigungsintervall (sl) und/oder das Geschwindigkeitsintervall (vl) und/oder das Beschleunigungsintervall (al) in Abhängigkeit einer Standard-Betätigungscharakteristik (FD) für die jeweilige Betätigungseinheit (2a, 3a) festgelegt werden.

12. Verfahren nach einem der vorhergehenden Ansprüche, **dadurch gekennzeichnet, dass** bei der Ermittlung der Wertepaare (PB, PA) und/oder bei der Prüfung auf signifikante Änderung (X, Y) in der Betätigungsgeschwindigkeit (vB, vA) lediglich auf die Wertepaare (PB, PA) zurückgegriffen wird, für die der Absolutwert der Betätigungsgeschwindigkeit (vB, vA) zumindest für ein Mindest-Betätigungsintervall (slmin) oberhalb eines Geschwindigkeits-Grenzwertes (vG) verbleibt.

13. Verfahren nach einem der vorhergehenden Ansprüche, **dadurch gekennzeichnet, dass**
- ein Histogramm (H) für die fortlaufend gebildeten Wertepaare (PB, PA) aus dem ermittelten Betätigungsweg (sB, sA) und der zugeordneten Betätigungsgeschwindigkeits-Kenngröße (vB, vA, aB, aA) erstellt wird (St4a), wobei dazu für jedes gebildete Wertepaar (PB, PA) eine Häufigkeit (A) für das Auftreten dieses Wertepaares (PB, PA) beim Betätigen des Betätigungsmittels (2b, 3b) ermittelt und dem Wertepaar (PB, PA) diese Häufigkeit (A) zugeordnet wird; und
- das Histogramm (H) bewertet wird, indem geprüft wird, ob sich Wertepaare (PB, PA) für bestimmte Betätigungswege (sB, sA) häufen, wobei den Betätigungswegen (sB, sA), an denen sich Wertepaare (sB, sA) häufen, als signifikante Änderungen (X, Y) in der Betätigungsgeschwindigkeit (vB, vA) identifiziert werden, wobei diesen signifikanten Änderungen (X, Y) in der Betätigungsgeschwindigkeit (vB, vA) Sprünge (Mi) und/oder Knickpunkte (Li) in der Betätigungscharakteristik (F) zugeordnet werden.

14. Verfahren nach einem der vorhergehenden Ansprüche, **dadurch gekennzeichnet, dass** für den Fall, dass bei der Prüfung auf signifikante Änderung (X, Y) in der Betätigungsgeschwindigkeit (vB, vA) keine Zuordnung von Sprüngen (Mi) und/oder Knickpunkten (Li) in der Betätigungscharakteristik (F) zu einem Betätigungsweg (sB, sA) erfolgen kann, denjenigen Betätigungswegen (sB, sA) ein Sprung (Mi) und/oder ein Knickpunkt (Li) zugeordnet wird, an denen sich ein Sprung (Mi) und/oder ein Knickpunkt (Li) in einer der Betätigungseinheit (2a, 3a) zugeordneten Standard-Betätigungscharakteristik (FD) befinden.

15. Verfahren nach einem der vorhergehenden Ansprüche, **dadurch gekennzeichnet, dass** nach dem Ermitteln der Sprünge (Mi) und/oder der Knickpunkte (Li) eine Anforderungskennlinie (KB, KA) erstellt wird, wobei die Anforderungskennlinie (KB, KA) den durch die Sprünge (Mi) und/oder die Knickpunkte (Li) voneinander getrennten Betätigungsbereichen (Nk) unterschiedliche Abhängigkeiten zwischen umzusetzenden Soll-Anforderungen (zSoll, aSoll) und dem entsprechend vorgegebenen Betätigungsweg (sB, sA) zuordnet.

16. Auswertemodul (2d, 3d) zur Durchführung des Verfahrens nach einem der vorhergehenden Ansprüche, wobei das Auswertemodul (2d, 3d) ausgebildet ist,
- fortlaufend Betätigungswege (sB, sA) des Betätigungsmittels (2b, 3b) zu ermitteln,
- den ermittelten Betätigungswegen (sB, sA) jeweils eine Betätigungsgeschwindigkeits-Kenngröße (vB, vA, aB, aA) des Betätigungsmittels (2b, 3b) zuzuordnen, so dass fortlaufend Wertepaare (PB, PA) aus dem ermittelten Betätigungsweg (sB, sA) und der zugeordneten Betätigungsgeschwindigkeits-Kenngröße (vB, vA, aB, aA) gebildet werden können, wobei die Betätigungsgeschwindigkeits-Kenngröße (vB, vA, aB, aA) in Abhängigkeit der Betätigungsgeschwindigkeit (vB, vA) des Betätigungsmittels (2b, 3b) bei dem jeweiligen Betätigungsweg (sB, sA) gebildet werden kann, und
- anhand der gebildeten Wertepaare (PB, PA) geprüft werden kann, ob signifikante Änderungen (X, Y) in der Betätigungsgeschwindigkeit (vB, vA) auftreten, wobei den Betätigungswegen (sB, sA), an denen signifikante Änderungen (X, Y) in der Betätigungsgeschwindigkeit (vB, vA) auftreten, Sprünge (Mi) und/oder Knickpunkte (Li) in der Betätigungscharakteristik (F) zugeordnet werden können.

17. Fahrzeug (1) mit einem Auswertemodul (2d, 3d) nach Anspruch 16, wobei das Fahrzeug (1) mindestens eine Betätigungseinheit (2a, 3a) und einen Wegsensor aufweist, wobei die mindestens eine Betätigungseinheit (2a, 3a) über einen Kommunikationspfad (2f, 3f) mit dem Auswertemodul (2d, 3d) verbunden ist zum Übertragen des Betätigungsweges (sB, sA) an das Auswertemodul (2d, 3d), und wobei der Wegsensor ausgebildet ist, den Betätigungsweg zu erfassen.

18. Fahrzeug (1) nach Anspruch 17, **dadurch gekennzeichnet, dass** das Auswertemodul (2d, 3d) nicht in der Betätigungseinheit (2a, 3a) angeordnet ist und/oder das Auswertemodul (2d, 3d) Bestandteil einer Steuereinrichtung (2e, 3e) des Fahrzeuges (1) ist.

19. Fahrzeug nach Anspruch 18, **dadurch gekennzeichnet, dass** die Betätigungseinheit (2a, 3a) eine Brems-Betätigungseinheit (2a) mit einem Brems-Betätigungsmittel (2b) eines elektrisch steuerbaren Bremssystems (2) und/oder eine Antriebs-Betätigungseinheit (3a) mit einem Antriebs-Betätigungsmittel (3b) eines elektrisch steuerbaren Antriebssystems (3) ist.

## Claims

1. Method for determining jumps (Mi) and/or break points (Li) in an actuation characteristic (F) of an actuation unit (2a, 3a), wherein the actuation unit (2a, 3a) can be actuated via an actuation means (2b, 3b), wherein the actuation characteristic (F) defines different actuation ranges (Nk) which are separated from one another by the jumps (Mi) and/or the break points (Li), wherein different actuation forces (PF) for actuating the actuation means (2b, 3b) are each set in the actuation ranges (Nk), wherein the jumps (Mi) and/or the break points (Li) are determined by actuating the actuation means (2b, 3b), in which method
- actuation travel values (sB, sA) of the actuation means (2b, 3b) are continuously determined (St1),
- an actuation speed parameter (vB, vA, aB, aA) is assigned (St2) to each of the determined actuation travel values (sB, sA), so that pairs of values (PB, PA) consisting of the determined actuation travel value (sB, sA) and the assigned actuation speed parameter (vB, vA, aB, aA) are continuously formed (St3), wherein the actuation speed parameter (vB, vA, aB, aA) is formed on the basis of an actuation speed (vB, vA) of the actuation means (2b, 3b) at the relevant actuation travel value (sB, sA), and
- using the pairs of values (PB, PA) formed, it is checked whether there are (St4) significant changes (X, Y) in the actuation speed (vB, vA), wherein jumps (Mi) and/or break points (Li) in the actuation characteristic (F) are assigned (St5) to the actuation travel values (sB, sA) at which there are significant changes (X, Y) in the actuation speed (vB, vA).

2. Method according to claim 1, **characterized in that** the actuation speed (vB, vA) is used as an actuation speed parameter, the actuation speed (vB, vA) being derived from the actuation travel value (sB, sA), in particular by deriving the actuation travel value (sB, sA) and/or by forming a difference quotient (Q).

3. Method according to claim 1 or claim 2, **characterized in that** when checking for significant changes (X, Y) in the actuation speed (vB, vA), it is established whether, for a specific actuation travel value (sB, sA), there is (St4.1) a falling edge (X) in the actuation speed (vB, vA) and/or a rising edge (Y) in the actuation speed (vB, vA).

4. Method according to any of the preceding claims, **characterized in that** an actuation acceleration (aB, aA) is used as an actuation speed parameter, the actuation acceleration (aB, aA) characterizing the change in actuation speed (vB, vA) over time, the actuation acceleration (aB, aA) being derived from the actuation travel value (sB, sA), in particular by twice deriving the actuation travel value (sB, sA) and/or by twice forming a difference quotient (Q).

5. Method according to claim 4, **characterized in that** when checking for a significant change (X, Y) in the actuation speed (vB, vA), it is established at which actuation travel value (sB, sA) an acceleration maximum (amax) or an acceleration minimum (amin) is located (St4.2).

6. Method according to claim 5, **characterized in that** acceleration maxima (amax) and acceleration minima (amin) are averaged over a plurality of actuations of the actuation means (2b, 3b) and, when checking for a significant change (X, Y) in the actuation speed (vB, vA), it is established at which actuation travel value (sB, sA) an averaged acceleration maximum (aavgmax) or an averaged acceleration minimum (aavgmin) is located.

7. Method according to any of claims 4 to 6, **characterized in that** significant changes (X, Y) in the actuation speed (vB, vA) resulting from pairs of values (PB, PA) consisting of the determined actuation travel value (sB, sA) and the assigned actuation speed (vB, vA) are compared and/or validated and/or corrected with significant changes (X, Y) in the actuation speed (vB, vA) resulting from pairs of values (PB, PA) consisting of the determined actuation travel value (sB, sA) and the assigned actuation acceleration (aB, aA).

8. Method according to any of the preceding claims, **characterized in that** the actuation travel value (sB, sA) is output via an actuation signal (BB, BA) generated by the actuation unit (2a, 3a) on the basis of the actuation, the actuation travel value (sB, sA) preferably being detected by a travel sensor (2c, 3c).

9. Method according to any of the preceding claims, **characterized in that** the actuation characteristic (F) is specified by a spring characteristic curve (FK), the spring characteristic curve (FK) being defined by springs (2h, 3h) in the actuation unit (2a, 3a), the springs (2h, 3h) opposing actuation of the actuation means (2b, 3b) to different degrees in the respective actuation ranges (Nk) and there being break points (Li) in the spring characteristic curve (FK) between the actuation ranges (Nk).

10. Method according to any of the preceding claims, **characterized in that** when determining the pairs of values (PB, PA) and/or when checking for a significant change (X, Y) in the actuation speed (vB, vA), only the pairs of values (PB, PA) for which the actuation travel value (sB, sA) lies in one or more specified actuation intervals (sI) and/or the actuation speed (vB, vA) lies in one or more specific speed intervals (vI) and/or the actuation acceleration (aB, aA) lies in one or more specific acceleration intervals (aI) are taken into account.

11. Method according to claim 10, **characterized in that** the actuation interval (sl) and/or the speed interval (vI) and/or the acceleration interval (al) are established on the basis of a standard actuation characteristic (FD) for the relevant actuation unit (2a, 3a).

12. Method according to any of the preceding claims, **characterized in that** when determining the pairs of values (PB, PA) and/or when checking for a significant change (X, Y) in the actuation speed (vB, vA), only the pairs of values (PB, PA) for which the absolute value of the actuation speed (vB, vA) remains above a speed limit (vG), at least for a minimum actuation interval (slmin), are used.

13. Method according to any of the preceding claims, **characterized in that**
- a histogram (H) is created (St4a) for the continuously formed pairs of values (PB, PA) consisting of the determined actuation travel value (sB, sA) and the assigned actuation speed parameter (vB, vA, aB, aA), a frequency (A) for the occurrence of this pair of values (PB, PA) being determined for each pair of values (PB, PA) formed when actuating the actuation means (2b, 3b), and this frequency (A) being assigned to the pair of values (PB, PA); and
- the histogram (H) is evaluated by checking whether pairs of values (PB, PA) accumulate for specific actuation travel values (sB, sA), the actuation travel values (sB, sA) where pairs of values (sB, sA) accumulate being identified as significant changes (X, Y) in the actuation speed (vB, vA), these significant changes (X, Y) in the actuation speed (vB, vA) being assigned jumps (Mi) and/or break points (Li) in the actuation characteristic (F).

14. Method according to any of the preceding claims, **characterized in that** in the event that, during the check for a significant change (X, Y) in the actuation speed (vB, vA), jumps (Mi) and/or break points (Li) in the actuation characteristic (F) cannot be assigned to an actuation travel value (sB, sA), a jump (Mi) and/or a break point (Li) is assigned to the actuation travel values (sB, sA) where a jump (Mi) and/or a break point (Li) is located in one of the standard actuation characteristics (FD) assigned to the actuation unit (2a, 3a).

15. Method according to any of the preceding claims, **characterized in that** after determining the jumps (Mi) and/or the break points (Li), a requirement characteristic curve (KB, KA) is created, the requirement characteristic curve (KB, KA) assigning different dependencies between the target requirements (zSoll, aSoll) to be implemented and the correspondingly specified actuation travel value (sB, sA) to the actuation ranges (Nk) which are separated from one another by the jumps (Mi) and/or the break points (Li).

16. Evaluation module (2d, 3d) for carrying out the method according to any of the preceding claims, wherein the evaluation module (2d, 3d) is configured to
- continuously determine actuation travel values (sB, sA) of the actuation means (2b, 3b),
- assign an actuation speed parameter (vB, vA, aB, aA) of the actuation means (2b, 3b) to each of the determined actuation travel values (sB, sA), so that pairs of values (PB, PA) consisting of the determined actuation travel value (sB, sA) and the assigned actuation speed parameter (vB, vA, aB, aA) can be continuously formed, wherein the actuation speed parameter (vB, vA, aB, aA) can be formed on the basis of the actuation speed (vB, vA) of the actuation means (2b, 3b) at the relevant actuation travel value (sB, sA), and
- using the pairs of values (PB, PA) formed, it can be checked whether significant changes (X, Y) in the actuation speed (vB, vA) occur, it being possible for jumps (Mi) and/or break points (Li) in the actuation characteristic (F) to be assigned to the actuation travel values (sB, sA) at which significant changes (X, Y) in the actuation speed (vB, vA) occur.

17. Vehicle (1) comprising an evaluation module (2d, 3d) according to claim 16, wherein the vehicle (1) has at least one actuation unit (2a, 3a) and a travel sensor, wherein the at least one actuation unit (2a, 3a) is connected to the evaluation module (2d, 3d) via a communication path (2f, 3f) in order to transmit the actuation travel value (sB, sA) to the evaluation module (2d, 3d), and wherein the travel sensor is configured to detect the actuation travel value.

18. Vehicle (1) according to claim 17, **characterized in that** the evaluation module (2d, 3d) is not arranged in the actuation unit (2a, 3a) and/or the evaluation module (2d, 3d) is part of a control apparatus (2e, 3e) of the vehicle (1).

19. Vehicle according to claim 18, **characterized in that** the actuation unit (2a, 3a) is a brake actuation unit (2a) comprising a brake actuation means (2b) of an electrically controllable brake system (2) and/or a drive actuation unit (3a) comprising a drive actuation means (3b) of an electrically controllable drive system (3).

## Revendications

1. Procédé permettant de déterminer des sauts (Mi) et/ou des points d'inflexion (Li) dans une caractéristique d'actionnement (F) d'une unité d'actionnement (2a, 3a), dans lequel l'unité d'actionnement (2a, 3a) peut être actionnée par l'intermédiaire d'un moyen d'actionnement (2b, 3b), dans lequel différentes zones d'actionnement (Nk) sont définies par la caractéristique d'actionnement (F), lesquelles zones d'actionnement sont séparées les unes des autres par les sauts (Mi) et/ou les points d'inflexion (Li), dans lequel des forces d'actionnement (PF) différentes sont respectivement réglées dans les zones d'actionnement (Nk) pour l'actionnement du moyen d'actionnement (2b, 3b), dans lequel les sauts (Mi) et/ou les points d'inflexion (Li) sont déterminés par l'actionnement du moyen d'actionnement (2b, 3b), en
- déterminant en continu des courses d'actionnement (sB, sA) du moyen d'actionnement (2b, 3b) (St1),
- associant une grandeur caractéristique de vitesse d'actionnement (vB, vA, aB, aA) respectivement à des courses d'actionnement (sB, sA) déterminées (St2), en sorte que des paires de valeurs (PB, PA) sont formées en continu à partir de la course d'actionnement (sB, sA) déterminée et de la grandeur caractéristique de vitesse d'actionnement (vB, vA, aB, aA) associée (St3), dans lequel la grandeur caractéristique de vitesse d'actionnement (vB, vA, aB, aA) est formée en fonction d'une vitesse d'actionnement (vB, vA) du moyen d'actionnement (2b, 3b) pour la course d'actionnement (sB, sA) respective, et
- vérifiant, à l'aide des paires de valeurs (PB, PA) formées, s'il existe des variations (X, Y) significatives dans la vitesse d'actionnement (vB, vA) (St4), dans lequel des sauts (Mi) et/ou des points d'inflexion (Li) dans la caractéristique d'actionnement (F) sont associés aux courses d'actionnement (sB, sA) sur lesquelles il existe des variations (X, Y) significatives dans la vitesse d'actionnement (vB, vA) (St5).

2. Procédé selon la revendication 1, **caractérisé en ce que** la vitesse d'actionnement (vB, vA) est utilisée comme grandeur caractéristique de vitesse d'actionnement, dans lequel la vitesse d'actionnement (vB, vA) est dérivée de la course d'actionnement (sB, sA), en particulier par dérivation de la course d'actionnement (sB, sA) et/ou par formation d'un quotient de différence (Q).

3. Procédé selon la revendication 1 ou 2, **caractérisé en ce que,** lors de la vérification de variations (X, Y) significatives dans la vitesse d'actionnement (vB, vA), il est établi si, pour une course d'actionnement (sB, sA) définie, il existe un flanc descendant (X) dans la vitesse d'actionnement (vB, vA) et/ou un flanc ascendant (Y) dans la vitesse d'actionnement (vB, vA) (St4.1).

4. Procédé selon l'une des revendications précédentes,
**caractérisé en ce qu'**une accélération d'actionnement (aB, aA) est utilisée comme grandeur caractéristique de vitesse d'actionnement, dans lequel l'accélération d'actionnement (aB, aA) caractérise la variation temporelle de la vitesse d'actionnement (vB, vA), dans lequel l'accélération d'actionnement (aB, aA) est dérivée de la course d'actionnement (sB, sA), en particulier par double dérivation de la course d'actionnement (sB, sA) et/ou par double formation d'un quotient de différence (Q).

5. Procédé selon la revendication 4, **caractérisé en ce que,** lors de la vérification de la variation (X, Y) significative dans la vitesse d'actionnement (vB, vA), il est établi à quelle course d'actionnement (sB, sA) se trouve un maximum d'accélération (amax) ou un minimum d'accélération (amin) (St4.2).

6. Procédé selon la revendication 5, **caractérisé en ce que** les maxima d'accélération (amax) et les minima d'accélération (amin) sont moyennés sur plusieurs actionnements du moyen d'actionnement (2b, 3b) et, lors de la vérification de la variation (X, Y) significative dans la vitesse d'actionnement (vB, vA), il est établi à quelle course d'actionnement (sB, sA) se trouve un maximum d'accélération moyenné (aavgmax) ou un minimum d'accélération moyenné (aavgmin).

7. Procédé selon l'une des revendications 4 à 6, **caractérisé en ce que** des variations (X, Y) significatives dans la vitesse d'actionnement (vB, vA), lesquelles variations résultent de paires de valeurs (PB, PA) issues de la course d'actionnement (sB, sA) déterminée et de la vitesse d'actionnement (vB, vA) associée, sont comparées et/ou plausibilisées et/ou corrigés avec des variations (X, Y) significatives dans la vitesse d'actionnement (vB, vA), lesquelles variations résultent de paires de valeurs (PB, PA) issues de la course d'actionnement (sB, sA) déterminée et de l'accélération d'actionnement (aB, aA) associée.

8. Procédé selon l'une des revendications précédentes, **caractérisé en ce que** la course d'actionnement (sB, sA) est délivrée par l'intermédiaire d'un signal d'actionnement (BB, BA) généré par l'unité d'actionnement (2a, 3a) en fonction de l'actionnement, dans lequel la course d'actionnement (sB, sA) est de préférence détectée par un capteur de déplacement (2c, 3c).

9. Procédé selon l'une des revendications précédentes, **caractérisé en ce que** la caractéristique d'actionnement (F) est prédéfinie par une courbe caractéristique de ressort (FK), dans lequel la courbe caractéristique de ressort (FK) est définie par des ressorts (2h, 3h) dans l'unité d'actionnement (2a, 3a), dans lequel les ressorts (2h, 3h) s'opposent avec une intensité différente à un actionnement du moyen d'actionnement (2b, 3b) dans les zones d'actionnement (Nk) respectives, et des points d'inflexion (Li) sont présents dans la courbe caractéristique de ressort (FK) entre les zones d'actionnement (Nk).

10. Procédé selon l'une des revendications précédentes, **caractérisé en ce que,** lors de la détermination des paires de valeurs (PB, PA) et/ou lors de la vérification de la variation (X, Y) significative dans la vitesse d'actionnement (vB, vA), seules sont prises en compte les paires de valeurs (PB, PA) pour lesquelles la course d'actionnement (sB, sA) se situe dans un ou plusieurs intervalles d'actionnement (sl) prédéfinis et/ou la vitesse d'actionnement (vB, vA) se situe dans un ou plusieurs intervalles de vitesse (vl) définis et/ou l'accélération d'actionnement (aB, aA) se situe dans un ou plusieurs intervalles d'accélération (al) définis.

11. Procédé selon la revendication 10, **caractérisé en ce que** l'intervalle d'actionnement (sl) et/ou l'intervalle de vitesse (vl) et/ou l'intervalle d'accélération (al) sont établis en fonction d'une caractéristique d'actionnement standard (FD) pour l'unité d'actionnement (2a, 3a) respective.

12. Procédé selon l'une des revendications précédentes, **caractérisé en ce que,** lors de la détermination des paires de valeurs (PB, PA) et/ou lors de la vérification d'une variation (X, Y) significative dans la vitesse d'actionnement (vB, vA), il est fait appel uniquement aux paires de valeurs (PB, PA) pour lesquelles la valeur absolue de la vitesse d'actionnement (vB, vA) reste supérieure à une valeur limite de vitesse (vG) au moins pendant un intervalle d'actionnement minimal (slmin).

13. Procédé selon l'une des revendications précédentes, **caractérisé en ce que**
- un histogramme (H) est créé, à partir de la course d'actionnement (sB, sA) déterminée et de la grandeur caractéristique de vitesse d'actionnement (vB, vA, aB, aA) associée, pour les paires de valeurs (PB, PA) formées en continu (St4a), dans lequel à cet effet, pour chaque paire de valeurs (PB, PA) formée, une fréquence (A) de survenue de cette paire de valeurs (PB, PA) lors de l'actionnement du moyen d'actionnement (2b, 3b) est déterminée, et cette fréquence (A) est associée à la paire de valeurs (PB, PA) ; et
- l'histogramme (H) est évalué en vérifiant si des paires de valeurs (PB, PA) s'accumulent pour des courses d'actionnement (sB, sA) définies, dans lequel les courses d'actionnement (sB, sA) où les paires de valeurs (sB, sA) s'accumulent sont identifiées comme des variations (X, Y) significatives dans la vitesse d'actionnement (vB, vA), dans lequel des sauts (Mi) et/ou des points d'inflexion (Li) dans la caractéristique d'actionnement (F) sont associés à ces variations (X, Y) significatives dans la vitesse d'actionnement (vB, vA).

14. Procédé selon l'une des revendications précédentes, **caractérisé en ce que,** dans le cas où, lors de la vérification d'une variation (X, Y) significative dans la vitesse d'actionnement (vB, vA), il n'est pas possible d'associer des sauts (Mi) et/ou des points d'inflexion (Li) dans la caractéristique d'actionnement (F) à une course d'actionnement (sB, sA), un saut (Mi) et/ou un point d'inflexion (Li) est associé aux courses d'actionnement (sB, sA) sur lesquelles se trouvent un saut (Mi) et/ou un point d'inflexion (Li) dans une caractéristique d'actionnement standard (FD) associée à l'unité d'actionnement (2a, 3a).

15. Procédé selon l'une des revendications précédentes,
**caractérisé en ce qu**'après la détermination des sauts (Mi) et/ou des points d'inflexion (Li), une courbe caractéristique d'exigence (KB, KA) est créée, dans lequel la courbe caractéristique d'exigence (KB, KA) associe, aux zones d'actionnement (Nk) séparées les unes des autres par les sauts (Mi) et/ou les points d'inflexion (Li), des dépendances différentes entre des exigences de consigne (zSoll, aSoll) à mettre en œuvre et la course d'actionnement (sB, sA) prédéfinie correspondante.

16. Module d'évaluation (2d, 3d) permettant la mise en œuvre du procédé selon l'une des revendications précédentes, dans lequel le module d'évaluation (2d, 3d) est configuré pour
- déterminer en continu des courses d'actionnement (sB, sA) du moyen d'actionnement (2b, 3b),
- associer aux courses d'actionnement (sB, sA) déterminées respectivement une grandeur caractéristique de vitesse d'actionnement (vB, vA, aB, aA) du moyen d'actionnement (2b, 3b), en sorte que des paires de valeurs (PB, PA) peuvent être formées en continu à partir de la course d'actionnement (sB, sA) déterminée et de la grandeur caractéristique de vitesse d'actionnement (vB, vA, aB, aA) associée, dans lequel la grandeur caractéristique de vitesse d'actionnement (vB, vA, aB, aA) peut être formée en fonction de la vitesse d'actionnement (vB, vA) du moyen d'actionnement (2b, 3b) pour la course d'actionnement (sB, sA) respective, et
- pouvoir vérifier, à l'aide des paires de valeurs (PB, PA) formées, si des variations (X, Y) significatives dans la vitesse d'actionnement (vB, vA) surviennent, dans lequel des sauts (Mi) et/ou des points d'inflexion (Li) dans la caractéristique d'actionnement (F) peuvent être associés aux courses d'actionnement (sB, sA) sur lesquelles surviennent des variations (X, Y) significatives dans la vitesse d'actionnement (vB, vA).

17. Véhicule (1) comportant un module d'évaluation (2d, 3d) selon la revendication 16, dans lequel le véhicule (1) présente au moins une unité d'actionnement (2a, 3a) et un capteur de déplacement, dans lequel l'au moins une unité d'actionnement (2a, 3a) est connectée au module d'évaluation (2d, 3d) par l'intermédiaire d'une voie de communication (2f, 3f) pour transmettre la course d'actionnement (sB, sA) au module d'évaluation (2d, 3d), et dans lequel le capteur de déplacement est configuré pour détecter la course d'actionnement.

18. Véhicule (1) selon la revendication 17, **caractérisé en ce que** le module d'évaluation (2d, 3d) n'est pas agencé dans l'unité d'actionnement (2a, 3a) et/ou le module d'évaluation (2d, 3d) fait partie d'un dispositif de commande (2e, 3e) du véhicule (1).

19. Véhicule selon la revendication 18, **caractérisé en ce que** l'unité d'actionnement (2a, 3a) est une unité d'actionnement de frein (2a) comportant un moyen d'actionnement de frein (2b) d'un système de frein (2) à commande électrique et/ou une unité d'actionnement d'entraînement (3a) comportant un moyen d'actionnement d'entraînement (3b) d'un système d'entraînement (3) à commande électrique.
